# EUROPÄISCHE PATENTSCHRIFT

(11) **EP 4 132 810 B1**
(45) Veröffentlichungstag und Bekanntmachung des Hinweises auf die Patenterteilung: **12.03.2025**
(21) Anmeldenummer: 21801050.2
(22) Anmeldetag: 22.10.2021
(51) Int. Cl.: B60K 11/08

(54) **LUFTFÜHRUNGSEINRICHTUNG**
AIRFLOW DEVICE
DISPOSITIF D'ÉCOULEMENT D'AIR

(30) Priorität: 28.10.2020 DE 102020128372
(43) Veröffentlichungstag der Anmeldung: 15.02.2023
(73) Patentinhaber: HBPO GmbH, 59557 Lippstadt (DE)
(72) Erfinder: ZHAO, Gaoming, 59557 Lippstadt (DE); SCHNEIDER, Christian, 33175 Bad Lippspringe (DE)
(74) Vertreter: Schober, Mirko
(86) Internationale Anmeldenummer: PCT/EP2021/079423
(87) Internationale Veröffentlichungsnummer: WO 2022/090094

(56) Entgegenhaltungen:
- EP-A1- 0 500 430
- EP-A1- 3 571 080
- CN-A- 109 109 654
- DE-A1- 10 306 158
- DE-A1- 102014 106 605
- FR-A1- 3 051 735

## Beschreibung

### Technisches Gebiet

Die Erfindung betrifft eine Luftführungseinrichtung nach dem Oberbegriff des Anspruchs 1.

### Stand der Technik

Solche Luftführungseinrichtungen werden in der Regel zur Regulierung des Lufteintritts in Fahrzeugfrontends verwendet. Mittels lamellenartigen Verschlusselementen wird hier der Lufteintritt reguliert. Zumeist lassen sich diese Luftregulierungslamellen über einen elektrischen Antrieb verstellen.

FR 3 051 735 A1, DE 10 2014 106605 A1, DE 103 06 158 A1 sowie EP 0 500 430 A1 beschreiben Luftführungseinrichtungen nach dem Oberbegriff des Anspruchs 1.

Sowohl der Antrieb als auch die Luftregulierungslamellen müssen entsprechend in der Luftführungseinrichtung gelagert werden. Stand der Technik ist, einen speziellen Lagerrahmen vorzusehen, welcher dann zwischen einem Lufteintrittsteil, durch welchen die Luft von außen in die Luftführungseinrichtung eintritt, und einem Luftführungskanal angeordnet werden muss. Oftmals müssen in Sandwichbauweise auch noch entsprechende Dichtungen zwischen den Lagerrahmen und den Luftführungskanal bzw. das Lufteintrittsteil eingebracht werden. In dem Lagerrahmen sind einerseits die Drehlager für die Luftregulierungslamellen und andererseits eine Befestigungsmöglichkeit für einen Antrieb untergebracht.

Aus diesem Sandwichaufbau ergibt sich, dass eine ganze Reihe von Bauteilen montiert werden muss, bis die Luftführungseinrichtung betriebsbereit ist. Je mehr Teile verwendet werden, desto höher sind natürlich auch die Kosten, die mit der Herstellung solcher Bauteile verbunden sind.

### Die Erfindung

Aufgabe der vorliegenden Erfindung ist es, eine Luftführungseinrichtung der eingangs genannten Art dahingehend weiterzuentwickeln, dass der Montageaufwand gegenüber konventionellen Lösungen reduziert ist.

Gelöst wird diese Aufgabe durch eine Luftführungseinrichtung mit den Merkmalen des Anspruchs 1. Weitere vorteilhafte Ausführungsformen finden sich in den Unteransprüchen.

Die erfindungsgemäße Luftführungseinrichtung, welche sich insbesondere zur Verwendung bei der Regulierung des Lufteintritts in Fahrzeugfrontends eignet, weist ein Lufteintrittsteil auf, durch welches Luft in die Luftführungseinrichtung eintreten kann. Ferner verfügt die Lufteintrittseinrichtung über einen stromabwärts des Lufteintrittsteils angeordneten und mit diesem verbundenen Luftführungskanal. Durch diesen Luftführungskanal kann die durch das Lufteintrittsteil eingetretene Luft geführt werden. Dabei weist die Luftführungseinrichtung wenigstens eine an der Luftführungseinrichtung an einem Schwenklager schwenkbar gelagerte Luftregulierungslamelle auf. Diese ist so eingerichtet und angeordnet, dass sie die durch das Lufteintrittsteil eingetretene Luftströmung durch Verändern ihrer Schwenkstellung beeinflussen kann. Erfindungsgemäß ist das Schwenklager für die wenigstens eine Luftregulierungslamelle durch einen ersten Lagerabschnitt, der Teil des Lufteintrittsteils ist, und einen zweiten Lagerabschnitt ausgebildet, der Teil des Luftführungskanals ist. Das Schwenklager entsteht also erst, wenn die Bauteile der Luftführungseinrichtung, nämlich Lufteintrittsteil, Luftführungskanal und Luftregulierungslamelle, zusammengesetzt werden. Auf diese Weise kann der sonst übliche Lagerrahmen ersatzlos entfallen. Folglich wird die Anzahl erforderlicher Bauteile bei der erfindungsgemäßen Lösung reduziert und so Kosten gesenkt. Zusätzlich kann natürlich Bauraum eingespart werden, da ein Bauteil ersatzlos entfällt.

Nach einer bevorzugten Ausführungsform der vorliegenden Erfindung ist vorgesehen, dass im Bereich, insbesondere an, der dem Luftführungskanal zugewandten Stirnseite des Lufteintrittsteils und/oder am im Bereich, insbesondere an, der dem Lufteintrittsteil zugewandten Stirnseite des Luftführungskanals ein Befestigungselement, insbesondere Befestigungsflansch angeordnet ist. Ein solches Befestigungselement kann zum Beispiel dazu dienen, beide Teile, den Luftführungskanal einerseits und das Lufteintrittsteil andererseits, aneinander zu befestigen. Bei entsprechender Ausbildung mit Clipfunktion kann dies auch werkzeuglos geschehen. Hierdurch wird die Montage zusätzlich erleichtert, da insoweit weitere Befestigungselemente nicht erforderlich sind. Bei der bevorzugten Ausbildung der Bestandteile aus Kunststoff oder dergleichen kann ein solches Befestigungselement, insbesondere ein Befestigungsflansch, an den jeweiligen Teilen angeformt sein.

Ähnliches gilt für Dichtelemente, die dazu dienen, die Verbindung von Lufteintrittsteil und Luftführungskanal möglichst dichtend auszubilden, damit an der Verbindungsstelle keine Luft austreten kann. Folglich kann nach einer bevorzugten Ausführung der vorliegenden Erfindung vorgesehen sein, dass im Bereich, insbesondere an, der dem Luftführungskanal zugewandten Stirnseite des Lufteintrittsteils und/oder am im Bereich, insbesondere an, der dem Lufteintrittsteil zugewandten Stirnseite des Luftführungskanals ein, insbesondere umlaufendes, Dichtelement angeordnet ist.

Bevorzugt sollen so wenige Bauteile wie möglich verwendet werden, um den Montageaufwand möglichst gering zu halten. Dazu kann beispielsweise vorgesehen sein, dass der erste Lagerabschnitt einstückig mit dem Lufteintrittsteil ausgebildet ist. Ebenso kann alternativ oder ergänzend vorgesehen sein, dass der zweite Lagerabschnitt einstückig mit dem Luftführungskanal ausgebildet ist. Je nach verwendetem Material kann die Einstückigkeit auch durch Anformen entsprechender Lagerabschnitte oder auch Anspritzen an dem jeweiligen Bauteil erreicht werden. Es ist daher nicht zwingend erforderlich, dass der Lagerabschnitt aus demselben Material besteht wie das Bauteil, an welchem er angeordnet ist. Dies ermöglicht vor allem, dass Materialien zum Einsatz kommen können, die sich besonders gut zur Ausbildung von Drehlagern für Luftregulierungslamellen eignen, während das übrige Material des jeweiligen Bauteils, Lufteintrittsteil bzw. Luftführungskanal, dann so ausgelegt werden kann, dass es sich besonders gut für den Transport von Luft eignet.

Erfindungsgemäß soll die Luftregulierung durch die wenigstens eine Luftregulierungslamelle automatisiert werden können. Dazu ist vorgesehen, dass die erfindungsgemäße Luftführungseinrichtung einen mit wenigstens einer Luftregulierungslamelle gekoppelten Antrieb umfasst, der die wenigstens eine Luftregulierungslamelle im Betätigungsfall verschwenkt. Dieser Antrieb, bei dem es sich beispielsweise um einen elektrisch betriebenen Aktor handeln kann, kann dann im Fahrzeug von der dortigen Steuerung angesprochen werden. So ist es möglich, die Stellung der Luftregulierungslamelle(n) automatisch oder bewusst durch den Fahrer zu verändern.

Erfindungsgemäß weist der Lufteintrittsteil einen ersten Antriebshalteabschnitt und der Luftführungskanal einen zweiten Antriebshalteabschnitt auf. Bei einer solchen Konfiguration wird dann der Antrieb zwischen dem ersten Antriebshalteabschnitt und dem zweiten Antriebshalteabschnitt aufgenommen. Dies erleichtert die Montage erheblich, da separate Halterungen nicht erforderlich sind, und der Antrieb lässt sich auf einfache Weise beim Zusammenbau der Luftführungseinrichtung montieren.

Nach einer bevorzugten Ausführungsform ist der Antrieb an dem Lufteintrittsteil und/oder dem Luftführungskanal fixiert. Dies wiederum spart Bauraum und eine separate Halterung für den Antrieb, was wiederum die Zahl der erforderlichen Bauteile verringert.

### Weg zur Ausführung der Erfindung

Die Erfindung wird nachfolgend anhand des in den Figuren 1 bis 5 dargestellten Ausführungsbeispiels näher erläutert.
Figur 1 zeigt eine perspektivische Darstellung einer erfindungsgemäßen Luftführungseinrichtung.
Figur 2 zeigt eine weitere perspektivische Darstellung der erfindungsgemäßen Luftführungseinrichtung in Explosionsansicht.
Figur 3 zeigt einen Längsschnitt durch die erfindungsgemäße Luftführungseinrichtung in der Ebene B in Figur 1.
Figur 4 zeigt einen Längsschnitt durch die erfindungsgemäße Luftführungseinrichtung in der Ebene A in Figur 1.
Figur 5 zeigt einen weiteren Längsschnitt der erfindungsgemäßen Luftführungseinrichtung in der Ebene B in vergrößerter Darstellung.

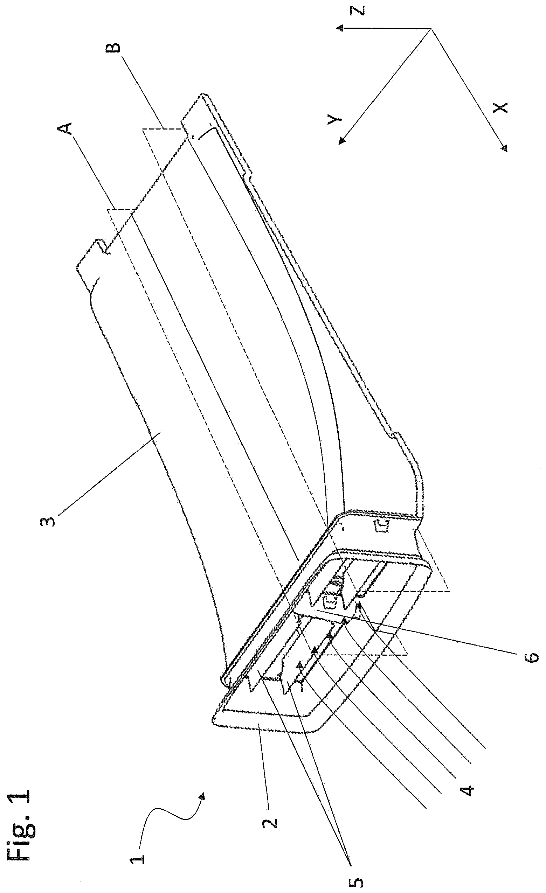

In Figur 1 ist die erfindungsgemäße Luftführungseinrichtung mit dem Bezugszeichen 1 bezeichnet. Da es sich um ein Bauteil handelt, welches insbesondere in Fahrzeugfrontends Verwendung finden kann, ist die Fahrtrichtung eines solchen Fahrzeugs mit X, die Vertikalrichtung mit Z und die zu X und Z senkrechte Querrichtung mit Y bezeichnet.

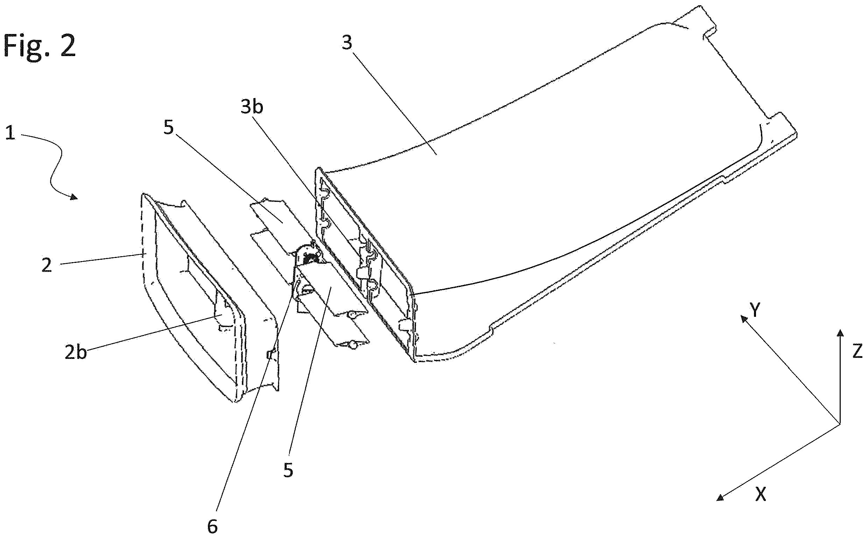

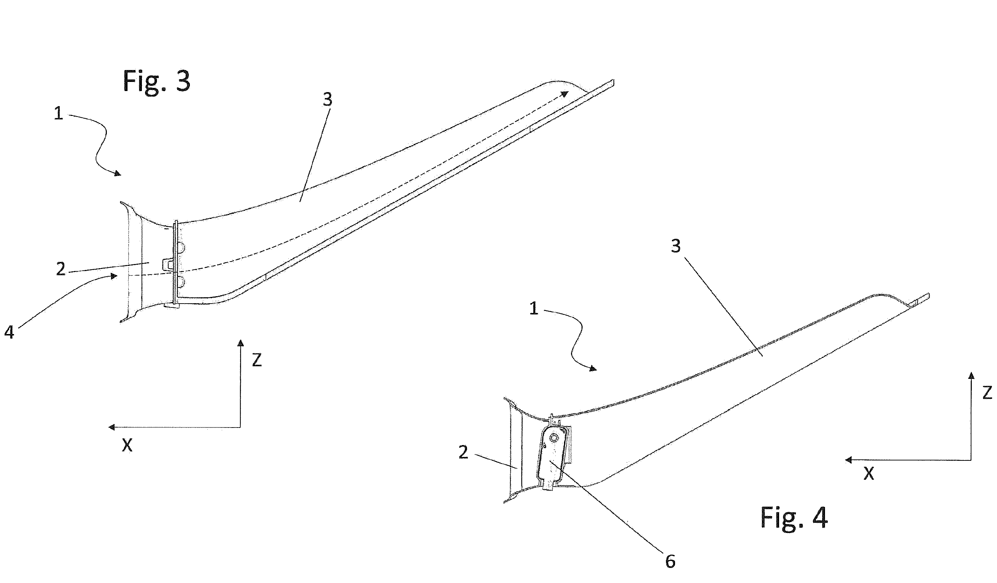

Die erfindungsgemäße Luftführungseinrichtung 1 weist einen Lufteintrittsteil 2 auf, durch welchen die Luft 4 in die Luftführungseinrichtung 1 eintritt. Nach dem Eintritt tritt sie durch eine Anordnung hindurch, die wenigstens eine Luftregulierungslamelle 5 umfasst. Die Luftführung ist insbesondere an den Pfeilen in dem Schnitt in der Ebene B (Figur 1) in Figur 3 zu erkennen. Im in Figur 2 gezeigten Beispiel sind beispielhaft vier Luftregulierungslamellen 5 dargestellt, es können aber auch mehr oder weniger solcher Lamellen vorhanden sein. Bevorzugt ist auch ein Antrieb 6 vorgesehen, der dafür sorgt, dass sich die Luftregulierungslamellen 5 verschränken lassen. Bevorzugt verläuft die Schwenkachse der Luftregulierungslamelle 5 parallel zur Querachse Y. Die Luft 4, welche durch die Luftregulierungslamellen 5 hindurchgetreten ist, gelangt in den Luftführungskanal 3 und von dort aus weiter ins Innere des Fahrzeugs.

In der in Figur 2 dargestellten Explosionszeichnung erkennt man, dass der Antrieb 6 von zwei Antriebshalteabschnitten 2b und 3b gehalten wird, wobei ein erster Antriebshalteabschnitt 2b am Lufteintrittsteil 2 und ein zweiter Antriebshalteabschnitt 3b am Luftführungskanal 3 angeordnet ist. Bevorzugt sind diese Antriebshalteabschnitte 2b und 3b mit den Bauteilen 2 und 3 einstückig ausgebildet.

Ferner können die Bauteile 2 und 3 wie hier angedeutet an ihren äußeren Rändern Flansche aufweisen, die ein - bevorzugt werkzeugloses - Montieren der beiden Bauteile 2 und 3 durch gegenseitige Anlage von deren aufeinander zuweisenden und die Flansche aufweisenden Stirnseiten ermöglichen.

Werden die beiden Bauteile 2 und 3 miteinander verbunden, so wird gleichzeitig der Antrieb 6 zwischen den Abschnitten 2b und 3b aufgenommen und fixiert, dieser Zustand ist insbesondere in dem Schnitt in der Ebene A (Figur 1) in Figur 4 zu erkennen.

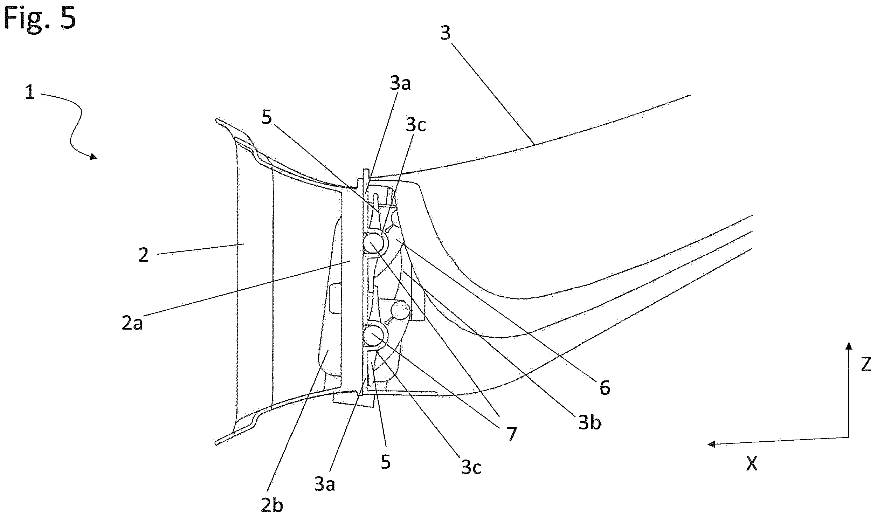

Ferner ist/sind die Luftregulierungslamelle(n) 5 über Schwenklagerzapfen schwenkbar an der Luftführungseinrichtung 1 gelagert. Hierzu weist - wie dies in Figur 5 gezeigt ist - der Lufteintrittsteil 2 einen entsprechenden ersten Lagerabschnitt 2a und der Luftführungskanal 3 entsprechend einen zweiten Lagerabschnitt 3c auf. Die beiden Lagerabschnitte 2a und 3c bilden zusammen das jeweilige Schwenklager, in welche die Schwenklagerzapfen 7 der Lamellen 5 aufgenommen sind. Der Abschnitt 2a dient gleichzeitig als Anlageflansch für den als Anlageflansch wirkenden Abschnitt 3a des Luftführungskanal 3. Diese Anlageflansche 2a und 3a können zudem zwischen sich eine Dichtung aufweisen oder selbst dichtend ausgebildet sein.

Beispielsweise kann an die Bauteile 2 und 3 jeweils eine entsprechende Dichtlippe angebracht oder angeformt sein. Durch die oben beschriebene Luftführungseinrichtung 1 ist es also möglich, eine entsprechende Luftführung mit Luftregulierungslamellen 5 äußerst bauteilsparend zu realisieren.

## Patentansprüche

1. Luftführungseinrichtung (1), insbesondere zur Regulierung des Lufteintritts (4) in Fahrzeugfrontends, aufweisend ein Lufteintrittsteil (2), durch welches Luft in die Luftführungseinrichtung (1) eintreten kann, sowie einen stromabwärts des Lufteintrittsteils (2) angeordneten und mit diesem verbundenen Luftführungskanal (3), durch welchen die durch das Lufteintrittsteil (2) eingetretene Luft geführt werden kann, wobei die Luftführungseinrichtung (1) wenigstens eine an der Luftführungseinrichtung (1) an einem Schwenklager (3c, 2a) schwenkbar gelagerte Luftregulierungslamelle (5) aufweist, die so eingerichtet und angeordnet ist, dass sie die durch das Luft-eintrittsteil (2) eingetretene Luftströmung durch Verändern ihrer Schwenkstellung beeinflussen kann,
wobei das Schwenklager (3c, 2a) für die wenigstens eine Luftregulierungslamelle (5) durch einen ersten Lagerabschnitt (2a), der Teil des Lufteintrittsteils (2) ist, und einen zweiten Lagerabschnitt (3c) ausgebildet ist, der Teil des Luftführungskanals (3) ist, wobei die Luftführungseinrichtung (1) einen mit wenigstens einer Luftregulierungslamelle (5) gekoppelten Antrieb (6) umfasst, der die wenigstens eine Luftregulierungslamelle (5) im Betätigungsfall verschwenkt,
**dadurch gekennzeichnet,**
**dass** der Lufteintrittsteil (2) einen ersten Antriebshalteabschnitt (2b) und der Luftführungskanal (3) einen zweiten Antriebshalteabschnitt (3b) aufweist, wobei der Antrieb (6) zwischen dem ersten Antriebshalteabschnitt (2b) und dem zweiten Antriebshalteabschnitt (3b) aufgenommen ist.

2. Luftführungseinrichtung (1) nach Anspruch 1,
**dadurch gekennzeichnet,**
**dass** im Bereich, insbesondere an, der dem Luftführungskanal zugewandten Stirnseite des Lufteintrittsteils (2) und/oder am im Bereich, insbesondere an, der dem Lufteintrittsteil (2) zugewandten Stirnseite des Luftführungskanals (3) ein Befestigungselement, insbesondere Befestigungsflansch angeordnet ist.

3. Luftführungseinrichtung (1) nach Anspruch 1 oder 2,
**dadurch gekennzeichnet,**
**dass** im Bereich, insbesondere an, der dem Luftführungskanal zugewandten Stirnseite des Lufteintrittsteils (2) und/oder am im Bereich, insbesondere an, der dem Lufteintrittsteil (2) zugewandten Stirnseite des Luftführungskanals (3) ein, insbesondere umlaufendes, Dichtelement angeordnet ist.

4. Luftführungseinrichtung (1) nach einem der vorigen Ansprüche,
**dadurch gekennzeichnet,**
**dass** der erste Lagerabschnitt (2a) einstückig mit dem Lufteintrittsteil (2) ausgebildet ist.

5. Luftführungseinrichtung (1) nach einem der vorigen Ansprüche,
**dadurch gekennzeichnet,**
**dass** der zweite Lagerabschnitt (3c) einstückig mit dem Luftführungskanal (2) ausgebildet ist.

6. Luftführungseinrichtung (1) nach einem der vorigen Ansprüche,
**dadurch gekennzeichnet,**
**dass** der Antrieb (6) an dem Lufteintrittsteil (2) und/oder dem Luftführungskanal (3) fixiert ist.

## Claims

1. Airflow device (1), in particular for regulating the air inlet (4) into vehicle front ends, comprising an air inlet part (2) through which air can enter into the airflow device (1), as well as an airflow duct (3) which is arranged downstream of the air inlet part (2) and in communication therewith through which the air entering through the air inlet part (2) can be guided, wherein the airflow device (1) comprises at least one air regulating slat (5) which is pivotably mounted on a pivot bearing (3c, 2a) on the airflow device (1) and which is oriented and arranged in such a way that by changing its pivotal position it can influence the air stream entering through the air inlet part (2), wherein the pivot bearing (3c, 2a) for the at least one air regulating slat (5) is formed by a first bearing portion (2a) which is part of the air inlet part (2), and a second bearing portion (3c) which is part of the air flow duct (3), wherein the airflow device (1) comprises a drive (6) which is coupled to at least one air regulating slat (5) and which in the operational state pivots the at least one air regulating slat (5),
**characterised in**
**that** the air inlet part (2) has a first drive holding portion (2b) and the airflow duct (3) has a second drive holding portion (3b), wherein the drive (6) is housed between the first drive holding portion (2b) and the second drive holding portion (3b).

2. Airflow device (1) according to Claim 1,
**characterised in**
**that** a fastening element, in particular a fastening flange, is arranged in the region of, in particular on, the end side of the air inlet part (2) facing the airflow duct, and/or in the region of, in particular on, the end side of the airflow duct (3) facing the air inlet part (2).

3. Airflow device (1) according to Claim 1 or 2
**characterised in**
**that** a, in particular circumferential, sealing element is arranged in the region of, in particular on, the end side of the air inlet part (2) facing the airflow duct, and/or in the region of, in particular on, the end side of the airflow duct (3) facing the air inlet part (2).

4. Airflow device (1) according to one of the preceding claims
**characterised in**
**that** the first bearing portion (2a) is formed integral with the air inlet part (2).

5. Airflow device (1) according to one of the preceding claims,
**characterised in**
**that** the second bearing portion (3c) is formed integral with the airflow duct (2).

6. Airflow device (1) according to one of the preceding claims,
**characterised in**
**that** the drive (6) is fixed on the air inlet part (2) and/or on the airflow duct (3).

## Revendications

1. Dispositif d'écoulement d'air (1) qui est particulièrement approprié pour réguler l'admission d'air (4) dans l'extrémité avant d'un véhicule et qui présente une partie d'admission d'air (2) à travers laquelle de l'air peut pénétrer dans le dispositif d'écoulement d'air (1) ainsi qu'un canal d'écoulement d'air (3) qui est disposé en aval de la partie d'admission d'air (2) et qui est relié à cette dernière et à travers lequel l'air qui a pénétré à travers la partie d'admission d'air (2) peut être conduit, dans lequel le dispositif d'écoulement d'air (1) présente au moins une lamelle de régulation de l'air (5) qui est montée de manière pivotante sur le dispositif d'écoulement d'air (1) sur un palier à pivot (3c, 2a) et qui est conçue et agencée de telle sorte qu'elle peut influencer l'écoulement d'air qui a pénétré à travers la partie d'admission d'air (2) en changeant la position de pivotement de cette dernière,
dans lequel le palier à pivot (3c, 2a) pour l'au moins une lamelle de régulation d'air (5) est formé par une première partie de palier (2a) qui fait partie de la partie d'admission d'air (2) et par une seconde partie de palier (3c) qui fait partie du canal d'écoulement d'air (3), dans lequel le dispositif d'écoulement d'air (1) comporte un entraînement (6) couplé à au moins une lamelle de régulation de l'air (5) qui fait pivoter l'au moins une lamelle de régulation de l'air (5) lorsqu'elle est actionnée,
**caractérisé en ce**
**que** la partie d'admission d'air (2) comporte une première partie d'arrêt de l'entraînement (2b) et le canal d'écoulement d'air (3) comporte une seconde partie d'arrêt de l'entraînement (3b), dans lequel l'entraînement (6) est reçu entre la première partie d'arrêt de l'entraînement (2b) et la seconde partie d'arrêt de l'entraînement (3b).

2. Dispositif d'écoulement d'air (1) selon la revendication 1,
**caractérisé en ce**
**que** dans la zone, surtout à la face frontale de la partie d'admission d'air (2) tournée vers le canal d'écoulement d'air, et/ou dans la zone, surtout à la face frontale du canal d'écoulement d'air (3) tournée vers la partie d'admission d'air (2), un élément de fixation, surtout une bride de fixation, est agencée.

3. Dispositif d'écoulement d'air (1) selon la revendication 1 ou 2,
**caractérisé en ce**
**que** dans la zone, surtout à la face frontale de la partie d'admission d'air (2) tournée vers le canal d'écoulement d'air, et/ou dans la zone, surtout à la face frontale du canal d'écoulement d'air (3) tournée vers à la partie d'admission d'air (2), un élément d'étanchéité, surtout circonférentiel, est agencée.

4. Dispositif d'écoulement d'air (1) selon l'une quelconque des revendications précédentes,
**caractérisé en ce**
**que** la première partie de palier (2a) est solidaire à la partie d'admission d'air (2).

5. Dispositif d'écoulement d'air (1) selon l'une quelconque des revendications précédentes,
**caractérisé en ce**
**que** la seconde partie de palier (3c) est solidaire au canal d'écoulement d'air (3).

6. Dispositif d'écoulement d'air (1) selon l'une quelconque des revendications précédentes,
**caractérisé en ce**
**que** l'entraînement (6) est fixé à la partie d'admission d'air (2) et/ou au canal d'écoulement d'air (3).
